Europäisches Patentamt

European Patent Office

Office européen des brevets

(11) Publication number: **0 150 686**
**B1**

## EUROPEAN PATENT SPECIFICATION

(45) Date of publication of patent specification: **16.08.89**

(51) Int. Cl.⁴: **B 64 F 1/28**

(21) Application number: **84830290.7**

(22) Date of filing: **26.10.84**

(54) **An extensible cylinder and piston unit for supporting a vertically moving platform carrying a delivery device and feeding thereto a fluid under pressure from an underlying stationary tank.**

(30) Priority: **15.12.83 IT 4951983**

(43) Date of publication of application:
**07.08.85 Bulletin 85/32**

(45) Publication of the grant of the patent:
**16.08.89 Bulletin 89/33**

(84) Designated Contracting States:
**DE FR GB**

(56) References cited:
**FR-A-1 165 661**
**FR-A-1 172 082**
**US-A-2 061 975**
**US-A-2 434 824**
**US-A-2 642 957**

(73) Proprietor: **Cutore, Gaetano**
**Via Asmara, 33**
**I-00199 Roma (IT)**

(72) Inventor: **Cutore, Gaetano**
**Via Asmara, 33**
**I-00199 Roma (IT)**

(74) Representative: **Massari, Marcello**
**Studio M. Massari S.r.l. 23, Via Fontanella**
**Borghese**
**I-00186 Roma (IT)**

Courier Press, Leamington Spa, England.

## Description

This invention refers to an extensible cylinder and piston unit for supporting a vertically moving platform carrying a delivery device and feeding thereto a fluid under pressure from an underlying stationary tank.

A unit of this type is particularly, even if not exclusively, used in the installation provided for feeding the fuel under high pressure to an airplane refuelling hose mounted on a platform vertically moving from a lowered position, wherein it is completely received within a hole in the ground to a raised position relative to a fuel intake within the hole which is connected to a main feeding tank.

These installations are widely used at present in airports for refueling aircraft and the main characteristic thereof is the need of delivering big quantities of fuel under extremely high pressures.

At present this problem is mainly solved by connecting the main pipe either to the secondary pipe carried by the moving platform or to each secondary pipe by means of a flexible pipe having a certain length sealingly connected to the main feeding pipe at one end and to the secondary pipe at the other end thereof.

The above-mentioned flexible pipes are known in the art as well as the serious drawbacks, such as cracks and bursts, to which they are subject in use, particularly when high fuel rates are delivered at high pressure.

For instance this drawback is not overcome by the teachings of U.S.—A—2,061,975 corresponding to the preamble of claim 1 wherein a length of a flexible pipe or hose is still utilized.

Furthermore no length of the above mentioned pipe is contained within the unit operating the platform all the pipe being external thereto. This construction has the further drawback that the platform cannot rotate about the mounting unit axis.

It is accordingly an object of the invention to provide an extensible unit of completely new construction which allows the stationary source of fuel under pressure to be safely, permanently and reliably connected to the hose delivery device placed on the moving platform, but also acts as a platform supporting and lifting member.

More particularly the invention refers to a lifting hydraulic cylinder and piston unit having a double effect, which unit also comprises an extensible pipe for feeding the fuel from a separate underground tank to the platform.

It is a further object of the invention to provide such a unit that allows complete rotations of the platform about the unit axis.

These objects are overcome by the features of claim 1. Claims 2 to 13 concern particular embodiments of the invention.

The hydraulic cylinder and piston unit of the invention comprises a hollow piston having a piston head similarly provided with a through axial bore and a fuel feeding pipe placed within the hollow piston and fitted in the bore of the air lock which is sealingly engaged both with the inner wall of the cylinder and with the outer wall of the fuel feeding pipe, thus allowing the cylinder and the feeding pipe to slide with respect to the piston. This allows the platform to be lifted maintaining the connection of the underground tank with the delivery hose carried by the platform in all the possible positions thereof, that is from the completely lowered to the completely raised position of the platform.

More particularly, one end of the cylinder and inner connecting pipe will be fixedly connected to one of the relatively moving portions, either the platform or the bottom of the platform receiving hole, while one end of the piston is fixedly connected to the other relatively moving portion, hole bottom or platform, the communication between the relatively moving parts being obtained through the hollow body of the piston and the bore of the inner pipe, as it will be more particularly described.

In the embodiment which will be described with reference to the drawings the piston lower end is connected to the platform receiving hole while the upper end of the cylinder-inner feeding pipe assembly is connected to the platform. It is intended, however, that the unit will work very well also inverting the position of the members thereof.

The invention will now be described in details with reference to the annexed drawings, wherein:

Figure 1 is an axial sectional view of the unit of the invention showing the platform in the completely lowered position wherein it is completely received in the hole; and,

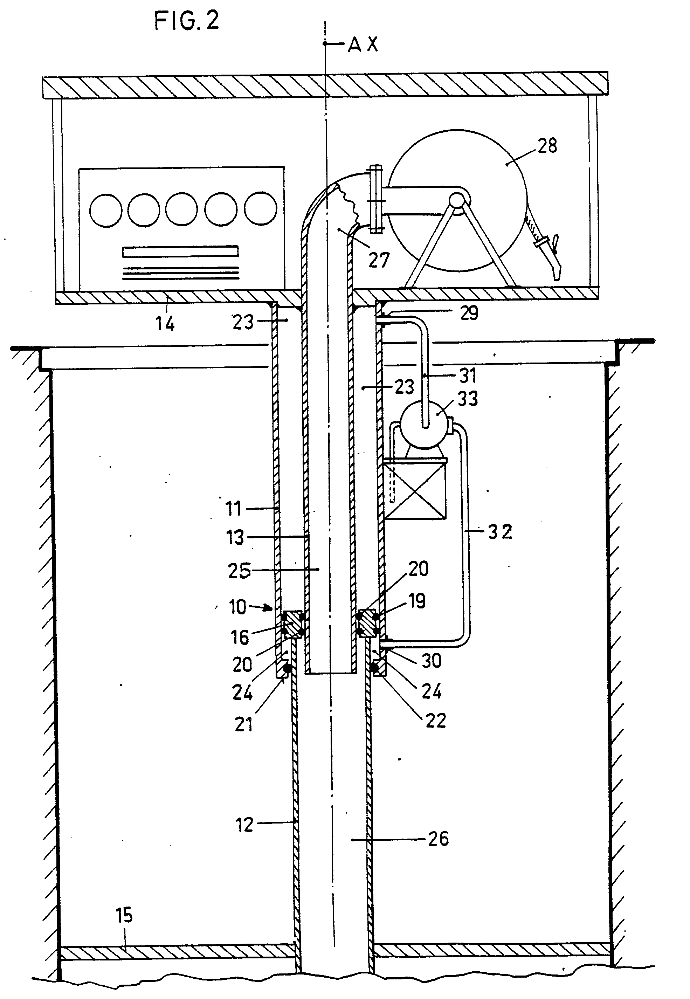

Figure 2 is a similar sectional view of the unit showing the platform in the completely raised position.

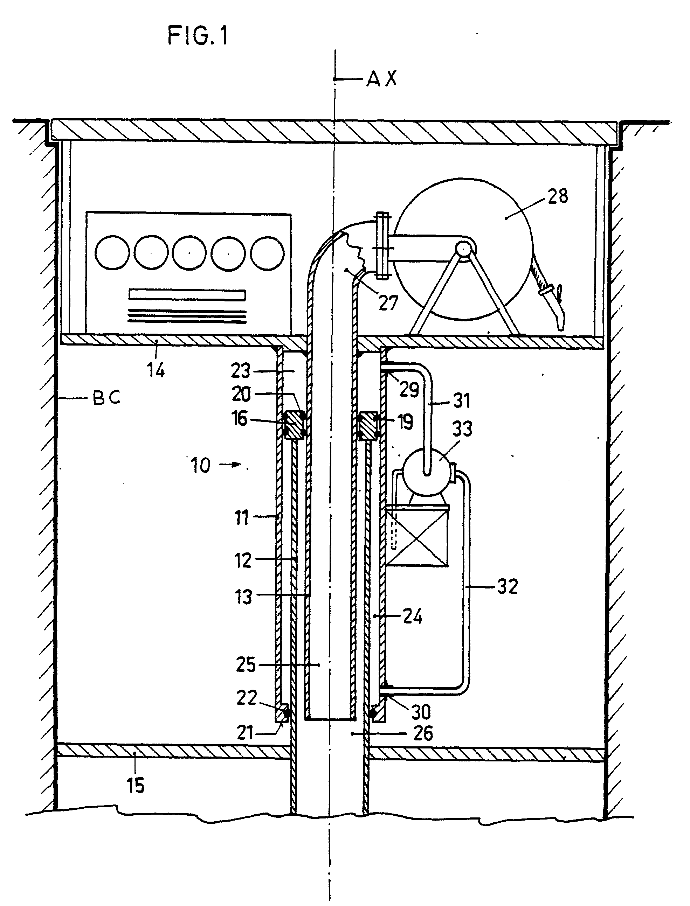

With reference to Figure 1, the connecting unit generally referred to by numeral 10 substantially comprises three coaxial pipes.

The upper end of outer pipe 11, which is the cylinder of the unit, and inner pipe 13, which is the feeding pipe, are connected to platform 14, while the lowered intermediate pipe 12, which is the hollow piston of the unit, is connected to slab 15 of hole BC which receives the platform in the completely lowered position thereof.

The bore of pipe 12 is connected to the fuel tank, not shown in the figure, and comprises a ring-shaped piston head 16 at the upper end thereof.

Piston head 16 has an outer diameter slightly shorter than the inner diameter of pipe 11, while the diameter of the inner bore thereof is slightly longer than the outer diameter of inner pipe 13.

Furthermore, bottom 21 of outer pipe 11 forming the cylinder has an axial circular opening having a diameter slightly longer than the outer diameter of central piston pipe 12.

A pair of sealing members referred to by numerals 19 and 20, respectively, are placed on both the outer cylindrical wall of piston head 16 and inner cylindrical wall of the axial bore thereof.

Sealing members 19 and 20 sealingly engage with the inner surface of cylinder 11 and outer surface of inner pipe 13.

Finally, a pair of sealing members referred to by numeral 22 are placed on the inwardly facing annular edge of the circular opening formed in the bottom of cylinder 21.

As it is clearly shown in the figures, unit 10 thus comprises an upper annular chamber referred to by numeral 23 and a lower annular chamber referred to by numeral 24. Piston head 16 separates chambers 23 and 24 from each other, which chambers have varying volumss according to the position of piston head 16 within the cylinder 11 since, as described above, piston head 16 and the two coaxially arranged pipes fastened to platform 14 can slide with respect to each other, as it will be more fully described.

Furthermore, inner bore 25 of inner pipe 13 is in free communication with inner bore 26 of pipe 12 forming the hollow piston and, accordingly, it is also in connection with the fuel feeding tank.

Finally, since fuel delivery hose 27 is connected through supporting wheel 28 thereof to the upper end of inner pipe 13, the fuel under pressure can be fed from the tank to the hose.

Finally, the wall of cylinder 11 comprises two fittings 29 and 30 which accumulate with annular chambers 23 and 24, respectively. Thus, when fittings 29 and 30 are connected to a tank 34, of a suitable incompressible liquid, through two delivery pipes referred to by numerals 31 and 32, respectively, by means of an hydraulic pump 33, it will be possible to apply a hydraulic pressure either to upper annular chamber 23, thus causing the platform to be lifted, or to lower annular chamber 24, thus causing the platform to be lowered.

As shown in the figures, hydraulic pump 33 can be supported by a bracket integrally formed with outer cylinder 11.

This structure has the further advantage that it allows platform 14 to rotate about axis AX of the unit at any position of the latter.

## Claims

1. A double effect hydraulic extensible cylinder and piston unit (10) adapted to support a platform (14) carrying a device (27, 28) for delivering a fluid under pressure, moving vertically relative to a stationary base (15) such as a hole in the ground adapted to receive said platform in its completely lowered position wherein said unit mounting the platform comprises a one piece rigid pipe member (13) for feeding a fluid under pressure from a stationary tank located beneath said base and platform characterized in that said one piece rigid pipe member (13) is contained within said cylinder and piston unit (10), the piston (12) of which moves in respect of said rigid pipe member as said platform (14) moves vertically in respect of said base.

2. The extensible cylinder and piston unit according to claim 1, wherein said cylinder comprises a first, outer pipe (11); said piston comprises a second, intermediate pipe (12) and said rigid pipe member comprises a third, inner pipe (13), being said three pipes coaxially fitted one within the other, and wherein one end of said outer pipe (11) and said inner pipe (13) are fastened to one of the relatively moving parts, either said stationary base (15) or said moving platform (14), while one end of said second intermediate pipe (12) is fastened to the other moving part, either said platform or said stationary base, and the free end of said intermediate pipe comprising a cylindrical piston head (ring shaped air lock 16) which head has a through axial bore sealingly sliding against both the inner surface of said outer pipe (11) and the outer surface of said rigid inner pipe (13), as they relatively move.

3. The extensible cylinder and piston unit according to claim 2, wherein one end of said outer pipe (11) and said rigid inner pipe (13) are fastened to said platform (14), while one end of said intermediate pipe (12) is fastened to a slab (15) of said hole receiving said platform in its completely lowered position.

4. The extensible cylinder and piston unit according to claim 3, wherein the upper end of said rigid inner pipe (13) is connected to a fuel delivery hose (27—28).

5. The extensible cylinder and piston unit according to claim 3, wherein the bore (26) of said intermediate pipe (12) is in communication with said fuel feeding tank.

6. The extensible cylinder and piston unit according to claim 2, wherein the bore (25) of said fuel feeding pipe (13) and the bore (26) of said hollow piston (12) are in free communication at any relative position thereof.

7. The extensible cylinder and piston unit according to claim 2, wherein said annular piston head (16) has an outer diameter slightly smaller than the inner diameter of said first outer pipe (11) while the diameter of the inner bore thereof is slightly larger than the outer diameter of said rigid inner pipe (13).

8. The extensible cylinder and piston unit according to claim 7, wherein a pair of high pressure sealing members (19 and 20) are placed on both the outer cylindrical wall of said piston head (16) and the inner cylindrical wall of the axial bore thereof, said sealing members operating against both the inner surface of outer rigid pipe and the outer surface of said inner rigid pipe (13).

9. The extensible cylinder and piston unit according to claim 3, wherein the lower end (21) of said outer pipe (11) has a circular opening slightly larger than the outer diameter of said intermediate pipe (12).

10. The extensible cylinder and piston unit according to claim 9, wherein a pair of high pressure sealing members (22) are placed on the inwardly facing annular edge of said circular opening formed by the lower end (21) of said outer pipe (11).

11. The extensible cylinder and piston unit according to claim 9, wherein an upper annular chamber (23) is comprised between the outer annular face of said piston head (16) and the closed end of said outer pipe (11), and a lower annular chamber (24) is comprised between the inner annular face of said piston head (16) and a step (21) formed by said opening in the lower end of said outer pipe (11), said chambers being separated from each other by the piston head and having varying volumes according to the position of said piston head (16) within said outer pipe (11).

12. The extensible cylinder and piston unit according to claim 11, wherein said annular chambers (23 and 24) are connected to a fitting (29 and 30, respectively) for feeding thereto a hydraulic fluid under pressure from a hydraulic pump (33), through suitable pipes (31 and 32).

13. The extensible cylinder and piston unit according to claim 12, wherein said hydraulic pump (33) is supported by a bracket integrally formed with said outer pipe (11), so that the construction of said cylinder and piston unit enclosing said rigid inner pipe (13) and the arrangement of said hydraulic pump (33) and pipes (31, 33) allow said platform (14) to rotate about the axis (AX) of said unit, in any vertical position thereof.

**Patentansprüche**

1. Doppelwirkende, hydraulisch ausfahrbare Zylinder- und Kolbeneinheit (10) zur Stützung einer relativ zu einer stationären Basis (15) senkrecht beweglichen Plattform (14), die eine Vorrichtung (27, 28) zum Zuleiten von Flüssigkeit unter Druck trägt, wobei die Basis (15) eine die Plattform in vollständig abgesenkter Position aufnehmende Öffnung im Boden umfassen kann, und wobei die genannte Einheit mit der montierten Plattform ein einstückiges, starres Rohrelement (13) zur Zufuhr einer Flüssigkeit unter Druck aus einem unterhalb der genannten Basis und Plattform angeordneten stationären Tank aufweist, dadurch gekennzeichnet, daß das einstückige, starre Rohrelement (13) innerhalb der genannten Zylinder- und Kolbeneinheit (10) angeordnet ist, wobei der Kolben (12) relativ zum starren Rohrelement so bewegbar ist wie die Plattform (14) vertikal zur Basis.

2. Ausfahrbare Zylinder- und Kolbeneinheit nach Anspruch 1, dadurch gekennzeichnet, daß der genannte Zylinder ein erstes Außenrohr (11), der genannte Kolben ein zweites Zwischenrohr (12), und das genannte starre Rohrelement ein drittes Innenrohr (13) umfassen, die jeweils koaxial zueinander eingepaßt sind, und wobei ein Ende des genannten Außenrohrs (11) und des genannten Innenrohrs (13) mit einem der relativ zueinander bewegbaren Teile fest verbunden sind, und zwar entweder mit der genannten stationären Basis (15) oder mit der genannten beweglichen Plattform (14), während ein Ende des genannten zweiten Zwischenrohrs (12) mit dem anderen beweglichen Teil fest verbunden ist, und zwar entweder mit der genannten Plattform oder mit der genannten stationären Basis, und daß das freie Ende des genannten Zwischenrohrs einen zylindrischen Kolbenkopf (ringförmige Dichtanordnung 16) aufweist, wobei der Kopf mit einer durchgehenden axialen Bohrung versehen ist und dichtend sowohl gegenüber der Innenwand des genannten Außenrohres (11) als auch gegenüber der Außenwand des genannten starren Innenrohres (13) gleitet.

3. Ausfahrbare Zylinder- und Kolbeneinheit nach Anspruch 2, wobei ein Ende des genannten Außenrohrs (11) und des genannten starren Innenrohrs (13) mit der genannten Plattform (14) fest verbunden sind, während ein Ende des genannten Zwischenrohrs (12) mit der genannten Platte (15) der die genannte Plattform in der vollständig abgesenkten Position aufnehmenden Öffnung fest verbunden ist.

4. Ausfahrbare Zylinder- und Kolbeneinheit nach Anspruch 3, wobei das obere Ende des genannten starren Innenrohres (13) mit einem Flüssigkeitszuleitungsschlauch (27—28) verbunden ist.

5. Ausfahrbare Zylinder- und Kolbeneinheit nach Anspruch 3, wobei die Bohrung (26) des Zwischenrohres (12) mit dem Flüssigkeitstank kommuniziert.

6. Ausfahrbare Zylinder- und Kolbeneinheit nach Anspruch 2, wobei die Bohrung (25) des genannten Flüssigkeit zuführenden Rohres (13) und die Bohrung (26) des genannten hohlen Kolbens (12) in jeder ihrer Rleativstellungen zueinander frei kommunizieren könne.

7. Ausfahrbare Zylinder- und Kolbeneinheit nach Anspruch 2, wobei der genannte ringförmige Kolbenkopf (16) einen geringfügig kleineren Außendurchmesser aufweist als der Innendurchmesser des genannten ersten Außenrohres (11) ist, während der Durchmesser der Innenbohrung desselben geringfügig größer ist als der Außendurchmesser des genannten starren Innenrohres (13).

8. Ausfahrbare Zylinder- und Kolbeneinheit nach Anspruch 7, wobei ein Paar von Hochdruckdichtungsteilen (19 und 20) sowohl an der äußeren zylindrischen Wandung des genannten Kolbenkopfes (16) als auch an der inneren zylindrischen Wandung der axialen Bohrung darin angeordnet sind, wobei die genannten Dichtungsteile sowohl gegenüber der inneren Oberfläche des genannten starren Außenrohres als auch gegenüber der äußeren Oberfläche des genannten starren Innenrohres (13) wirksam sind.

9. Ausfahrbare Zylinder- und Kolbeneinheit nach Anspruch 3, wobei das untere Ende (21) des genannten Außenrohres (11) eine kreisförmige, geringfügig größere Öffnung aufweist, als der äußere Durchmesser des genannten Zwischenrohres (12) ist.

10. Ausfahrbare Zylinder- und Kolbeneinheit nach Anspruch 9, wobei ein Paar von Hochdruckdichtungsteilen (22) an der einwärts gerichteten ringförmigen Kante der durch das untere Ende (21) des genannten Außenrohres (11) gebildeten kreisförmigen Öffnung angeordnet ist.

11. Ausfahrbare Zylinder- und Kolbeneinheit nach Anspruch 9, wobei eine obere ringförmige Kammer (23) zwischen der äußeren ringförmigen Fläche des genannten Kolbenkopfes (16) und dem geschlossenen Ende des genannten Außenrohres (11) ausgebildet ist, und wobei eine untere ringförmige Kamme (24) zwischen der inneren ringförmigen Fläche des genannten Kolbenkopfes (16) und einer Stufe (21) ausgebildet ist, die durch die Öffnung am unteren Ende des genannten Außenrohres (11) definiert ist, wobei die genannten Kammern durch den Kolbenkopf voneinander getrennt sind und entsprechend der Position des genannten Kolbenkopfes (16) innerhalb des Außenrohres (11) variierende Volumina aufweisen.

12. Ausfahrbare Zylinder- und Kolbeneinheit nach Anspruch 11, wobei die genannten ringförmigen Kammern (23 und 24) mit einem Anschlußstück (29 bzw. 30) verbunden sind zur Zufuhr von unter Druck stehender hydraulischer Flüssigkeit von einer hydraulischen Pumpe (33) durch geeignete Leitungen (31 und 32).

13. Ausfahrbare Zylinder- und Kolbeneinheit nach Anspruch 12, wobei die genannte hydraulische Pumpe (33) von einer zusammen mit dem Außenrohr (11) integral ausgebildeten Klammer gehalten ist, so daß die Konstruktion der genannten Zylinder- und Molbeneinheit einschließlich starrem Innenrohr (13) und der Anordnung der genannten hydraulischen Pumpe (33) samt Leitungen (31, 32) ein Drehen der genannten Plattform (14) um die Achse (AX) der genannten Einheit erlauben, und zwar in jeder vertikalen Position derselben.

**Revendications**

1. Une unité hydraulique extensible à double effet (10), une plate-forme (14) se déplaçant verticalement par rapport à une base fixe (15) telle qu'un trou dans le sol, agencée pour recevoir ladite plate-forme pour la position complètement abaissée de celle-ci supportant un dispositif (27, 28) pour délivrer un fluide sous pression, dans laquelle ladite unité supportant la plate-forme comporte un élément tubulaire rigide (13) pour délivrer un fluide sous pression à partir d'un réservoir fixe situé sous ladite base et plate-forme caractérisée en ce que ledit élément tubulaire dans une seule pièce (13) est contenu dans ladite unité comportant un corps et un piston (10) dont le piston (12) se déplace par rapport audit élément tubulaire rigide quand la dite plate-forme (14) se deplace verticalement par rapport à ladite base.

2. L'unité extensible de corps et de piston selon la revendication 1, dans laquelle ledit corps comporte une première conduite extérieure (11); ledit piston comporte une deuxième conduite intermédiaire (12) at ledit élément rigide tubulaire comporte une troisième conduite intérieure (13); lesdites trois conduites disposées coaxialement l'une dans l'autre, et dans laquelle une des extremités de ladite conduite extérieure (11) et ladite conduite intérieure (13) sont assujetties à l'une des pièces en mouvement relatif, soit à ladite

base fixe (15) soit à ladite plate-forme mobile, (14) tandis que une des extrémités de ladite deuxième conduite intermédiaire (12) est assujettie à l'autre pièce mobile, soit à ladite plate-forme, soit à ladite base fixe, et l'extremité libre de ladite conduite intermédiaire comporte une tête de piston cylindrique de forme annulaire (16), ladite tête de piston présentant un alésage axial traversant, coulissant de manière étanche contre à la fois la paroi intérieure de ladite conduite extérieure (11) et la paroi extérieure de ladite conduite intérieure rigide (13), quand elles se deplacent relativement.

3. L'unité extensible de corps et de piston selon la revendication 2, dans laquelle une des extremités de ladite conduite extérieure (11) et ladite conduite intérieure rigide (13) sont assujetties à ladite plate-forme (14), alors que une des extremités de ladite conduite intermédiaire (12) est assujettie à une semelle (15) dudit trou recevant ladite plate-forme pour la position complètement abaissée de celle-ci.

4. L'unité extensible de corps et de piston selon la revendication 3, dans laquelle l'extremité supérieure de ladite conduite intérieure rigide (13) est reliée à une tubulure d'alimentation en carburant (27—28).

5. L'unité extensible de corps et de piston selon la revendication 3, dans laquelle l'alesage (26) de ladite conduite intermédiaire (12) est en communication avec ledit réservoir d'alimentation en carburant.

6. L'unité extensible de corps et de piston selon la revendication 2, dans laquelle l'alésage (25) de ladite conduite (13) d'alimentation en carburant et l'alésage (26) dudit piston creux (12) sont en communication libre pour toute position relative de ceux-ci.

7. L'unité extensible de corps et de piston selon la revendication 2, dans laquelle ladite tête de piston annulaire (16) présente un diamètre extérieur légèrement inférieur au diamètre intérieur de ladite première conduite extérieure (11), tandis que le diamètre de son alésage intérieur est legerement supérieure du diamètre extérieur de ladite conduite intérieure rigide (13).

8. L'unité extensible de corps et de piston selon la revendication 7, dans laquelle une paire d'éléments d'étanchéité sous haute pression (19 et 20) sont placés sur la paroi cylindrique extérieure de ladite tête de piston (16) et sur la paroi cylindrique intérieure de l'alésage axial de celle-ci, lesdits éléments d'étanchéité agissant à la fois contre la surface intérieure de ladite conduite extérieure rigide et la surface extérieure de ladite conduite intérieure rigide (13).

9. L'unité extensible de corps et de piston selon la revendication 3, dans laquelle le fond (21) de ladite conduite extérieure (11) présente une ouverture circulaire légèrement plus grande que le diamètre extérieur de ladite conduite intermédiaire (12).

10. L'unité extensible de corps et de piston selon la revendication 9, dans laquelle une paire d'éléments d'étanchéité sous haute pression (22) sont placés sur le bord annulaire dirigé vers l'intérieur de l'ouverture circulaire formée par le fond (21) de ladite conduite extérieure (11).

11. L'unité extensible de corps et de piston selon la revendication 9, dans laquelle une chambre annulaire supérieure (23) est comprise entre la face annulaire extérieure de ladite tête de piston (16) et le fond fermé de ladite conduite extérieure (11), et une chambre annulaire inférieure (24) est comprise entre la face annulaire intérieure de ladite tête de piston (16) et une saille (21) formée par ladite ouverture dans le fond de ladite conduite extérieure (11), lesdites chambres étant séparées l'une de l'autre par la tête de piston de présentant des volumes variables selon la position de ladite tête de piston (16) dans ladite conduite extérieure (11).

12. L'unité extensible de corps et de piston selon la revendication 11, dans laquelle lesdites chambres annulaires (23 et 24) sont reliées à un accessoire (respectivement 29 et 30) pour délivrer dans celles-ci un fluide hydraulique sous pression à partir d'une pompe hydraulique (33), à travers des convenables conduites.

13. L'unité extensible de corps et de piston selon la revendication 12, dans laquelle ladite pompe hydraulique (33) est supportée par un support formé d'une seule pièce avec ladite conduite extérieure (11) de manière que la construction de ladite unité de corps et piston contenant ladite conduite rigide intérieure (13) et la disposition de ladite pompe hydraulique (33) et conduites (31, 33) permet à ladite plat-forme (14) de tourner autour de l'axe (AX) de ladite unité, pour toutes positions verticales de celle-ci.

FIG.1

FIG. 2